# EUROPEAN PATENT APPLICATION

(11) **EP 4 464 592 A1**
(43) Date of publication of application: **20.11.2024**
(21) Application number: 23305797.5
(22) Date of filing: 17.05.2023
(51) Int. Cl.: B63B 35/44, B63B 75/00

(54) **FLOATING OFFSHORE PLATFORM WITH AN INTEGRATED TANK AND A BOLTED FLANGE CONNECTION**

(71) Applicant: TOTALENERGIES ONETECH, 92400 Courbevoie (FR)
(72) Inventor: DENEUVILLE, Loïc, 92078 PARIS LA DEFENSE (FR); RABOIN, Jean-Christophe, 92078 PARIS LA DEFENSE (FR)
(74) Representative: Lavoix

(57) **Abstract**

A support structure (4) of the floating offshore platform comprises a beam (8) formed of one or several tubes (10) with a tank (12) delimited inside one or several tubes (10) of the beam (8), and a least one bolted flange connection (16) connecting an end of one tube (10) of the beam (8) to another structural element (6) of the support structure (4), each bolted flange connection (16) comprising a first flange (20) and a second flange (22) bolted together with bolts (24), wherein at least one bolted flange connection (16) is sealed with a sealing assembly (32) comprising at least one sealing member (34) configured for sealing the bolted flange connection (16).

## Description

The present invention relates to the technical field of floating offshore platforms, notably floating offshore platforms for wind turbines.

A floating offshore platform comprises a support structure which is configured for supporting the equipment of the offshore platform. The support structure comprises for example a plurality of metal structural elements welded together, the structural elements comprising for example columns and beams extending transversely between the columns for maintaining a transverse spacing between the columns.

One of the aims of the invention is to propose a floating offshore platform which is a compact and lightweight naval construction with simple and robust design along with ease of installation, operation and maintenance.

To this end, the invention proposes a floating offshore platform comprising a support structure, the support structure comprising a beam formed of one or several tubes, the beam comprising a tank for storing fluid integrated inside the beam, the tank being delimited inside one or several tubes of the beam, and a least one bolted flange connection, each bolted flange connection connecting an end of one tube of the beam to another structural element of the support structure, each bolted flange connection comprising a first flange and a second flange bolted together with bolts, wherein at least one bolted flange connection is sealed with a sealing assembly comprising at least one sealing member configured for sealing the bolted flange connection.

The tank integrated in the beam provides an efficient way to increase the fluid storage capacity of the floating offshore platform with limiting the cost of construction of the floating offshore platform. The provision of a bolted flange connection between a tube of the beam and another structural element of the support structure allows obtaining a compact and lightweight naval construction that is very easy to install. The number of welding operations for assembling the support structure can be limited. The inspection and maintenance are easy, in particular the inspection and maintenance of the tank and fluid components associated to the tank.

In specific embodiments, the floating offshore platform comprises one or several of the following features, taken individually or according to any technically feasible combination:
- the first flange and/or the second flange extend inwardly relative to the tube of the beam;
- the sealing assembly comprises a sealing member provided as a sealing sleeve surrounding a junction between the tube of the beam and the other structural element;
- the sealing assembly comprises a sealing member provided as an annular seal interposed between the first flange and the second flange, the annular seal being partly received in a groove formed in the first flange and partly received in a groove formed in the second flange or entirely received in a groove formed in the first flange and in contact with a front face of the second flange or entirely received in a groove formed in the second flange and in contact with a front face of the first flange;
- one among the first flange and the second flange comprises an annular protrusion configured to engage into a annular groove formed in the other among the first flange and the second flange;
- at least one sealing member is received in the annular groove and pressed by the annular protrusion;
- a connection pipe extending from the second flange, a sealing ring being pressed between the connection pipe and the first flange;
- facing faces of the first flange and the second flange are mutually in contact;
- the sealing assembly comprises a sealing member provided as a sealing washer interposed between the first flange and the second flange, facing faces of the first flange and the second flange being for example spaced apart;
- the tank is pressurized;
- the tube comprises an internal partition wall extending across the tube for delimiting the tank inside the tube, the partition wall being located along the tube at a distance from the first flange;
- the tank is fluidly connected to fluid components located outside the beam via a connection pipe extending through the bolted flange connection;
- the beam comprises two tubes each connected to the other structural element by a respective bolted flange connection;
- the beam extends between two structural elements, the beam being connected to at least one of the two structural elements via one or several bolted flange connections.

The invention also relates to a wind turbine assembly comprising a floating offshore platform as defined above and a wind turbine supported by the floating offshore platform.

The invention and its advantages will be better understood upon reading the following description that is given solely by way of non-limiting example and with reference to appended drawings, in which:
- Figure 1 is a partial side view of a floating offshore platform comprising a support structure having two structural elements and a beam extending between the two structural elements;
- Figure 2 - 6 are sectional views of structural assemblies comprising a bolted flange connection between a tube of the beam and a structural element of a support structure according to different examples;
- Figure 7 and 8 are partial side views of support structures of floating offshore platforms structure according to different examples.

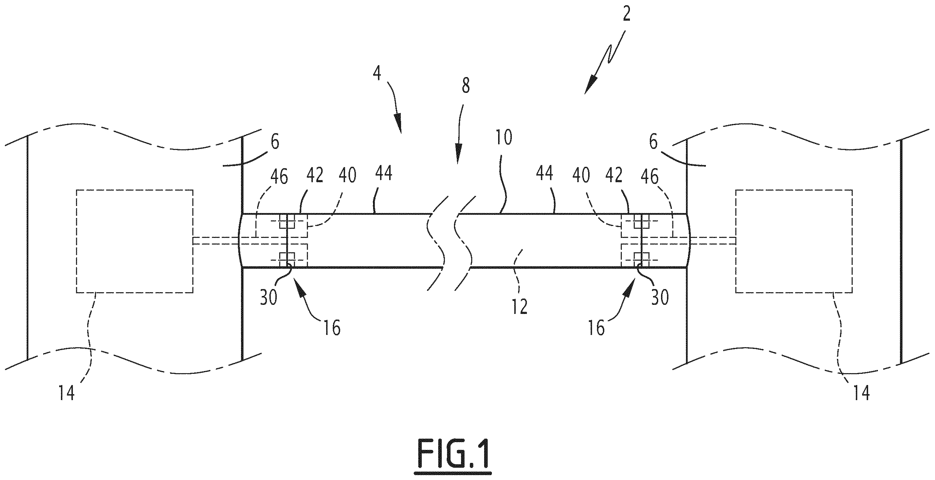

The floating offshore platform 2 illustrated on Figure 1 comprises a support structure 4 comprising two structural elements 6 spaced from one another and a beam 8 extending between the two structural elements 6 for connecting them together.

Each structural element 6 of the support structure 4 is for example a column the support structure 4. Each structural element 6 is preferably made of metal.

At least one or each among the two structural elements 6 defines for example a floater. Such structural element 6 has a positive buoyancy.

The beam 8 is of tubular construction. The beam 8 is formed of one tube 10 or several tubes 10 which are connected together, preferably welded together. Each tube 10 is preferably made of metal.

The external diameter of each tube 10 of the beam 8 is for example comprised between 1 meter and 6 meters, in particular between 2 meters and 5 meters.

The beam 8 is preferably submersible. By "submersible", it is meant that the beam 8 is partly or completely immerged when the floating offshore platform 2 is operated offshore.

The support structure 4 comprises a tank 12 for storing a fluid, the tank 12 being delimited in one or several tubes 10 of the beam 8. The tank 12 is thus "integrated" in the beam 8. The fluid is for example a liquid or a gas, in particular a pressurized gas, for example pressurized air.

The tank 12 is delimited for example in one single tube 10 of the beam 8 or in several tubes 10 of the beam 8. In the latter case, said tubes 10 of the beam 8 are connected together such that the individual internal volumes of said tubes 10 delimit a single common internal volume defining the tank 12. The tubes 10 of the beam 8 which delimit the tank 12 are for example welded together via open welded connections.

The tank 12 is for example fluidly connected to fluid components 14 supported by the support structure 4, the fluid components 14 being located for example on the structural elements 6 connected by the beam 8 or on pontoons of the offshore platform 2.

The fluid components 14 comprises for example one or several fluid circuits, one or several pipes, one or several reservoirs and/or one or several passive or active fluid control devices, such as one or several valves, one or several pressure regulators and/or one or several flow rate regulators.

The beam 8 is connected to the structural elements 6 via bolted flange connections 16. Each bolted flange connection 16 connects the end of one tube 10 of the beam 8 to one of the two structural elements 6.

The beam 8 has at least one tube 10 connected to each one of the two structural elements 6.

The beam 8 is for example connected to one structural element 6 via one tube 10, two tubes 10 or more than two tubes 10 and connected to the other structural element 6 via one tube 10, two tubes 10 or more than two tubes 10.

The beam 8 is connected to at least one of the two structural elements 6 by one or several bolted flange connections 16, each bolted flange connection 16 connecting a respective tube 10 to one of the two structural elements 6.

The beam 8 is for example connected to each one of the two structural elements 6 by one or several bolted flange connections 16, each bolted flange connection 16 connecting a respective end of a tube 10 to one of the structural elements 6.

In a variant, the beam 8 is connected to one structural element 6 by one or several bolted flange connections 16, each bolted flange connection 16 connecting a respective end of a tube 10 to said structural element 6, and connected to the other structural element 6 by one or several welded connections, each welded connection connecting a respective end of a tube 10 to said other structural element 6.

The beam 8 comprises for example at least one tube 10 which extends between the two structural elements 6 with having one end connected to one structural element 6 via a bolted flange connection 16 and another end connected to the other structural element 6 via a bolted flange connection 16 or a welded connection.

The beam 8 may comprise different number of tubes 10 and exhibit different shapes as a function of the arrangement of the tubes 10 of the beam 8. Besides, the support structure 4 comprises one or several separate beams 10 extending between the two structural elements and connecting the two structural elements 6.

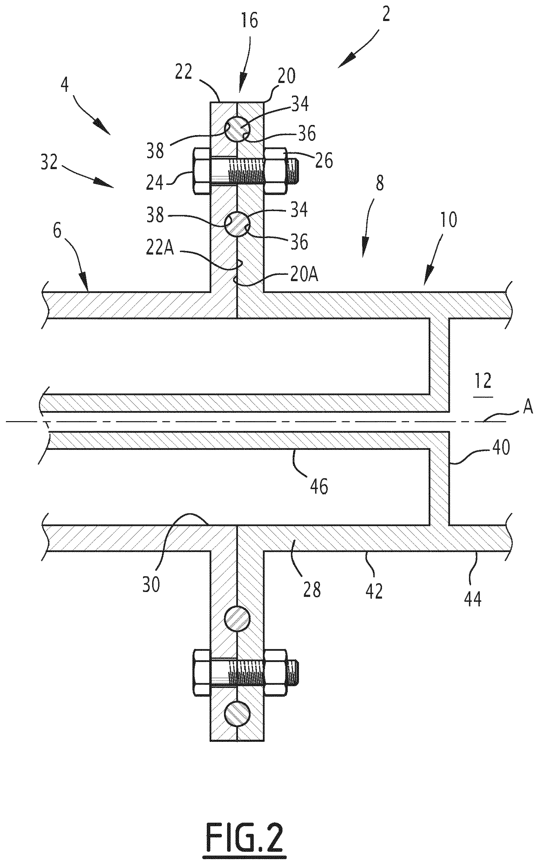

The bolted flange connections 16 are similar. Examples of structural assemblies comprising a beam 10 connected to a structural member 6 of a support structure 4 via a bolted flange connection 16 are illustrated on Figures 2 - 6 on which corresponding or similar elements are designated by the same numeral reference.

As illustrated on Figure 2, the bolted flange connection 16 comprises a first flange 20 provided on the tube 10 and a second flange 22 provided on the structural element 6, the first flange 20 and the second flange 22 being bolted together.

The first flange 20 and the second flange 22 are annular. The first flange 20 and the second flange 22 extend around a central axis A of the bolted flange connection 16. The first flange 20 has a front face 20A and the second flange 22 has a front face 22A. The front face 20A of the first flange 20 faces the front face 22A of the second flange 22.

The first flange 20 and the second flange 22 are abutted axially one against the other and bolted one to the other via a plurality of bolts 24.

The bolts 24 are distributed circumferentially on the first flange 20 and the second flange 22 around the central axis A. The bolts 24 are distributed around the central axis A along one or several imaginary circles.

Only two diametrically opposed bolts 24 are visible on Figure 2. In practice, the bolted flange connection 16 comprise preferably more than two bolts 24. The number of bolts 24 is for example chosen as function of the diameter of the first and second flanges 20, 22.

The first flange 20 is provided at an end 28 of the tube 10. The second flange 22 is provided for example on a connection opening 30 of the structural member 6. The end 28 of the tube 10 and the connection opening 30 are preferably coaxial and centered on the central axis A of the bolted flange connection 16. The end 28 of the tube 10 and the connection opening 30 are preferably of circular cross-section and of same diameter.

The bolts 24 of the bolted flange connection 16 extend through the first flange 20 and the second flange 22 for fixing the first flange 20 and the second flange 22 together, each bolt 24 being for example engaged with a mating nut 26.

The first flange 20 and the second flange 22 extend for example radially outwardly from the tube 10 and the connection opening 30, as illustrated on Figure 2, or radially inwardly from the tube 10 and the connection opening 30.

The first flange 20 and the second flange 22 are for example in direct contact with each other, in particular in metal-to-metal contact with each other. More specifically the front face 20A of the first flange 20 and the front face 22A of the second flange 22 are in direct contact with each other. This ensure a reliable mechanical connection of the tube 10 and the structural element 6 via the bolted flange connection 16.

The bolted flange connection 16 comprises a sealing assembly 32 configured for sealing the bolted flange connection 16.

The sealing assembly 32 seals the junction between the tube 10 and the structural element 6.

The sealing assembly 32 is configured for preventing liquid and/or gas to enter and/or exit the support structure 4 via the bolted flange connection 16.

The sealing assembly 32 is advantageously configured for preventing water to enter the support structure 4 via the bolted flange connection 16 and/or for preventing liquid and/or gas contained in the tank 12, in particular pressurized gas contained in the tank 12 to exit the support structure 4 via the bolted flange connection 16..

The sealing assembly 32 comprises one or several sealing members, including for example one or several annular seals, one or several sealing washers, one or several sealing rings and/or one or several sealing sleeves.

The sealing assembly 32 comprises for example at least one annular seal 34 interposed between the first flange 20 and the second flange 22 with being partly received in a first groove 36 formed in the first flange 20 and partly received in a second groove 38 formed in the second flange 22 or entirely received in a first groove 36 formed in the first flange 20 and in contact with the second flange 10 or entirely received in a second groove 38 formed in the second flange 22 and in contact with the first flange 20.

Each annular seal 34 is made for example of natural or synthetic rubber or elastomer.

As illustrated on Figure 2, the sealing assembly 32 comprises at least one annular seal 34, each annular seal 34 of the sealing assembly 32 being partly received in a first groove 36 formed in the first flange 20 and partly received in a second groove 38 formed in the second flange 22.

The sealing assembly 32 is preferably configured such that the first flange 20 and the second flange 22 are in contact with each other via their respective front faces 20A, 22A. Each annular seal 34 received in a first groove 36 and/or a second groove 38 allows a contact between the first flange 20 and the second flange 22 with an efficient sealing.

Preferably, the sealing assembly 32 is configured such that each annular seal 34 is compressed between the first flange 20 and the second flange 22.

In particular, the size and the shape of each annular seal 34 as well as the size and the shape of each groove receiving the annular seal 20 (first groove 36 and/or second groove 38) are configured for a compression of the annular seal 34 between the first flange 20 and the second flange 22.

Each annular seal 34 has for example a circular profile, an elliptical profile, a square profile, a rectangular profile or a trapezoidal profile in a free state of the annular seal 34, i.e. before compression between the first flange 20 and the second flange 22.

The sealing assembly 32 comprises for example two annular seals 34 arranged concentrically with being centered on the central axis A.

The sealing assembly 32 comprises for example one annular seal 34 located radially outwards relative to the bolts 24 and/or one annular seal 34 located radially inwards relative to the bolts 24.

The cross-section of a groove formed in the front face 20A of the first flange 20 or in the front face 22A of the second flange 22 for receiving at least partially or entirely an annular seal 34 may exhibit various profiles, such as a semi-circular profile, a square profile, a rectangular profile or a trapezoidal profile.

In one example, the tube 10 delimits the tank 12.

In such case, the tube 10 comprises advantageously a partition wall 40 extending across the tube 10 for delimiting the tank 12 in a section of the tube 10, the partition wall 40 being located along the tube 10 at a distance from the first flange 20. The tube 10 comprises a connection section 42 extending between the end 28 and the partition wall 40 and tank section 44 extending from the partition wall 40 opposite the end 28.

The provision of the partition wall 40 at a distance from the end 28 of the tube 10 connected to the structural element 6 by the bolted flange connection 16 improves the reliability as the bolted flange connection 16 which is not in contact with the fluid contained in the reservoir 30 and not subjected to the pressure of this fluid.

The support structure 4 comprises advantageously a connection pipe 46 for fluidly connecting the tank 12 to fluid components 14 (not shown on Figure 2).

The tank 12 is connected to said fluid components 14 via the bolted flange connection 16.

As illustrated on Figure 2, the connection pipe 46 extends from the partition wall 40 towards the structural element 6 for connecting the tank 12 to the fluid components 14.

The connection pipe 46 is connected to the fluid components 14 for example by a bolted connection or a welded connection or any other type of suitable connection.

The bolted flange connection 16 is not limited to the examples and variants discussed in reference to Figure 2.

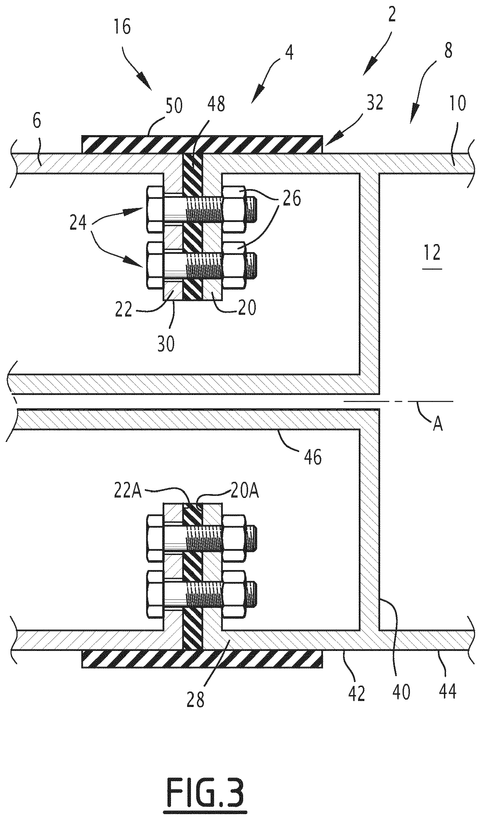

Other examples and variants may be contemplated as discussed below with reference to Figures 3 - 6 on which elements corresponding to that of Figure 2 are designated with the same numeral references.

In the bolted flange connection 16 of Figure 2, the first flange 20 and the second flange 22 protrude radially outwardly from the tube 10 and the connection opening 30 of structural element 6.

The bolted flange connection 16 of Figure 3 differs from that of Figure 2 in that the first flange 20 and the second flange 22 protrude radially inwardly from the tube 10 and the connection opening 30 of structural element 6. This configuration offers the advantage that the bolts 24 are located inside the bolted flange connection 16 and are thus protected from the outside elements, namely from the water.

The arrangements of the bolts 24 of the bolted flange connection 16 may be different to that of the bolted flange connection 16 of Figure 2.

The bolts 24 of the bolted flange connection 16 are arranged in one row of bolts 24 extending along an imaginary circle centered on the central axis A or several rows of bolts 24, each row extending along an imaginary circle centered on the central axis A, the rows being arranged concentrically around the central axis A.

The bolted flange connection 16 of Figure 3 differs from that of Figure 2 in that the bolted flange connection 16 comprises two rows of bolts 24 extending concentrically around the central axis A.

The sealing assembly 32 of the bolted flange connection 16 of the bolted flange of Figure 2 comprises one or several annular seals 34, each annular seal 34 being received in a first groove 36 and a second groove 38.

Alternatively or optionally, as illustrated on Figure 3, the bolted flange connection 16 comprises a sealing washer 48 which is interposed between the first flange 20 and the second flange 22 such that the first flange 20 and the second flange 22 bear against each other via the sealing washer 48 without contacting each other.

At least when compressed between the first flange 20 and the second flange 22, the sealing washer 48 is preferably flat shaped and extends radially relative to the central axis A. The bolts 14 of the bolted flange connection 16 extend for example through the sealing washer 48, via holes provided in the sealing washer 48.

The sealing washer 48 is for example made of metal, preferably a metal resisting to corrosion, in particular stainless steel or bronze, such as a bronze containing copper and in addition tin, zinc and/or aluminum.

Alternatively or optionally, as illustrated on Figure 3, the sealing assembly 32 comprises a sealing sleeve 50 arranged around the bolted flange connection 16.

The sealing sleeve 50 extends on the external surface of the tube 10 and on an external surface of the structural member 6 with covering the junction between the tube 10 and the structural member 6.

The sealing sleeve 50 is for example made of a flexible material. The sealing sleeve 50 made of a flexible material in conformable to the bolted flange connection 16. The sealing sleave 50 is for example wraped around the bolted flange connection 16.

The sealing sleeve 50 if for example made of one or several layers each made of rubber or made of a composite material comprising a matrix and reinforcement fibers embedded in the matrix.

The sealing sleeve 50 is for example obtained by wrapping the product Guard-Wrap^{™} of the company TRENTON around the bolted flange connection 16. The product Guard-Wrap^{™} comprises of a spunbonded polyester mat, saturated with microcrystalline wax that is laminated to a polyester film which is coated with microcrystalline wax. The product Guard-Wrap^{™}.

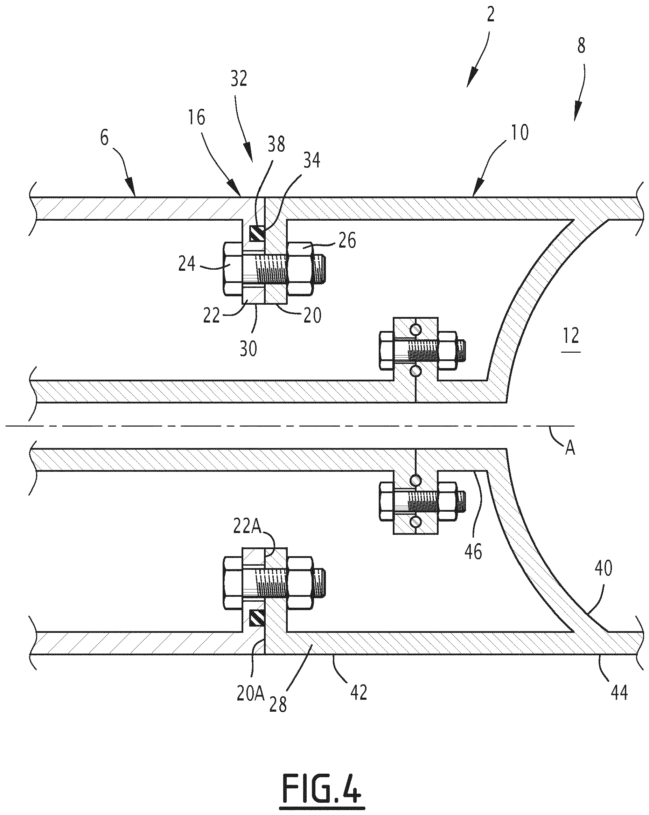

Alternatively or optionally, as illustrated on Figure 4, the sealing assembly 32 comprises an annular seal 34 that is entirely received in a groove provided in the first flange 20 with making a seal contact with the second flange 22 and/or an annular seal 34 that is entirely received in a groove provided in the second flange 22 with making a seal contact with the first flange 20

In particular, the sealing assembly 32 comprises an annular seal 34 which is entirely received in a second groove 38 formed in front face 22A of the second flange 22 with being in sealing contact with the front face 20A of the first flange 20A when the bolts 24 of the bolted flange connection 16 are tightened.

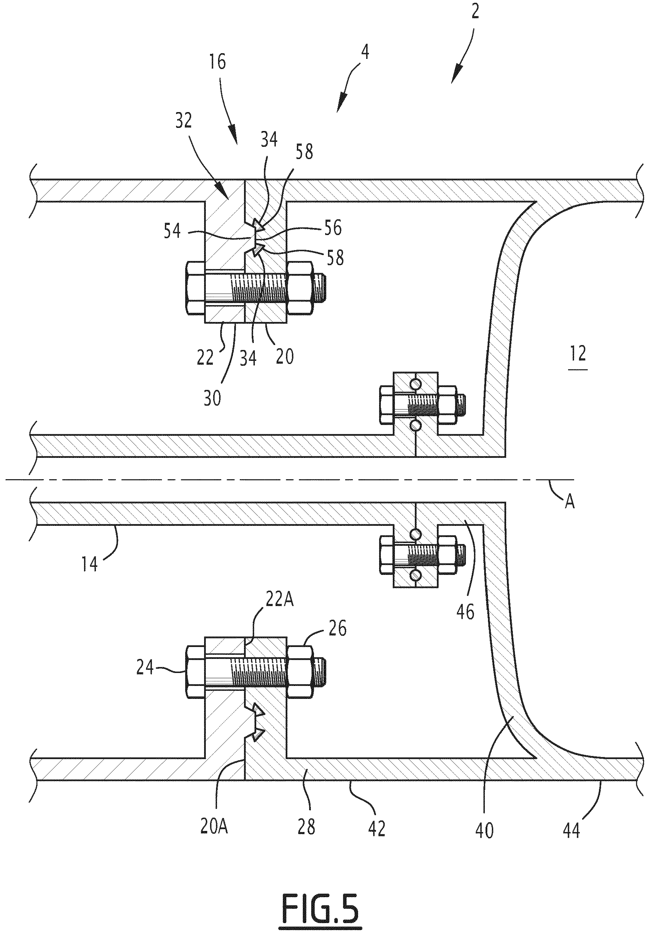

Alternatively or optionally, as illustrated on Figure 5, the sealing assembly 32 comprises an annular protrusion 54 formed on one among the first flange 20 and the second flange 22, the annular protrusion 54 engaging into a annular groove 56 formed in the other among the first flange 20 and the second flange 22, at least one annular seal 34 being optionally received in the annular groove 56 and compressed by the annular protrusion 54.

In particular, two annular seals 34 are for example received in the annular groove 56, each annular seal 34 being compressed by the annular protrusion 54 onto respective sealing seats 58, the two sealing seats 58 being preferably inclined relative to the central axis A and/or inclined one relative to the other.

The sealing assembly 32 comprises for example an annular protrusion 54 provided one the second flange 22 and an annular groove 56 provided on the first flange 20, two annular seals 34 being received in the annular groove 56 with being compressed in the annular groove 56 against respective sealing seats 58 inclined relative to the central axis A and inclined one relative to the other.

Each sealing seat 58 is for example frustoconical and centered on the central axis A, one sealing seat 58 facing radially outwardly and the other sealing seat 58 facing radially inwardly.

The half cone angle of each sealing seat 58 is for example comprises between 30° and 60° and in particular substantially equal to 45°.

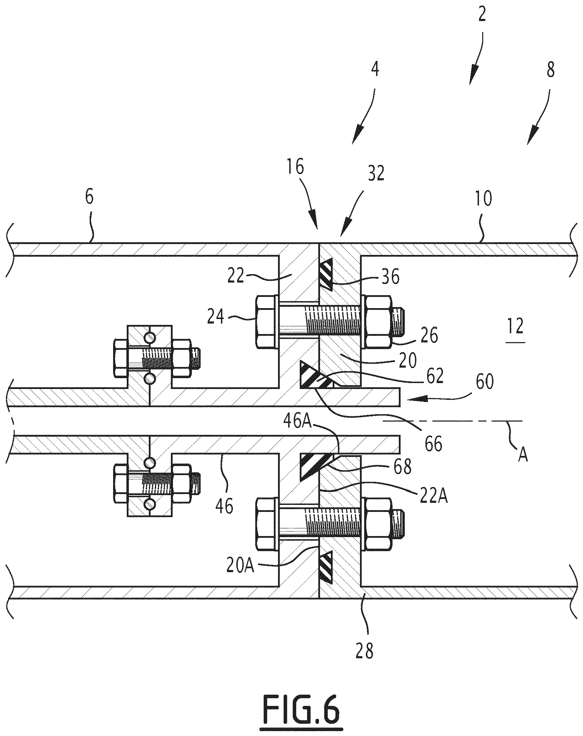

Alternatively or optionally, as illustrated on Figure 6, the sealing assembly 32 comprises for example an annular seal 34 which is partly or entirely received in a groove formed in the front face 20A, 22A of one of the first flange 20 and the second flange 22, the groove being shape such that the annular seal 34 is locked in the groove.

The groove is for example shaped such that an opening of the groove is narrower that a bottom of the groove.

The groove exhibits for example a trapezoidal cross-section, with the two parallel sides of the trapezoidal cross-section defining the bottom and the opening of the first groove and the converging sides of the trapezoidal cross-section defining the sides of the first groove.

As illustrated on Figure 6, the sealing assembly 32 comprises for example an annular seal 34 which is entirely received in a first groove 36 formed in front face 20A of the first flange 20 with being in sealing contact with the front face 22A of the second flange 22.

The first groove 38 exhibits a trapezoidal cross-section, with the two parallel sides of the trapezoidal cross-section defining the bottom and the opening of the first groove 38 and the converging sides of the trapezoidal cross-section defining the sides of the first groove 38.

Optionally, sealing of the bolted flange connection 16 is achieved through application of a sealing coating (not shown) such as painting, preferably a resin, such as polyester or epoxy resins, optionally reinforced with glass and/or carbon fiber, either in the form of bulk or woven or non-woven fabric.

The sealing coating is applied for example on the first flange 20, on the second flange 22, at the junction between the tube 10 and the structural element 6 and/or on the bolts 24.

As illustrated on Figure 6, in addition or in option, the sealing assembly 32 comprises a sealing arrangement 60 for creating seal between a connection pipe 46 for the fluid connection of the tank 12 and one among the first flange 20 and the second flange 22.

The sealing arrangement 60 comprises for example a sealing ring 62 wedged between an outer surface 46A of the connection pipe 46 and a sealing seat 64 of one among the first flange 20 and the second flange 22.

The sealing ring 62 comprises for example a cylindrical inner face 66 in contact with an outer face of the connection pipe 46 and/or a frustoconical outer surface 68 in contact with the sealing seat 64.

As illustrated on Figure 6, the connection pipe 46 is attached to the second flange 22, the sealing arrangement 60 being provided between the connection pipe 46 and the first flange 20 with the sealing ring 62 being fitted on the connection pipe 46 and wedged between the connection pipe 46 and the first flange 20.

As illustrated on Figure 1, the beam 8 comprises one single tube 10 having two ends each connected to a respective structural element 6.

The beam 8 may have different arrangement of tubes 10, various number of connections 16 with each of the structural elements 6 and different arrangements of the tank 12 in the tubes 10 of the beam 8.

The beam 8 comprises primary tubes 10, each primary tube 10 having at least one end connected to one of the structural elements 6. Each primary tube 10 has for example one end connected to one of the structural elements 6 and one end connected to other structural element 6 or one end connected to one of the structural elements 6 and one end connected to another tube 10 of the beam 8.

The beam 8 optionally comprises secondary tubes 10. The two ends of each secondary tube 10 are connected to other tubes 10 of the beam 8, each said other tube 10 being a primary tube 10 or another secondary tube 10. Such secondary tubes 10 are also designated as "braces".

The beam 8 is connected to the structural elements 6 via connections. Each connection connects the end a primary tube 10 of the beam 8 to one of the structural elements 6.

The tank 12 is advantageously fluidly connected to fluid components 14 via the connections between the beam 8 and the structural elements 6.

Each connection with one of the structural elements 6 is a bolted flange connection 16, each connection with the other structural element 6 being a welded connection or a bolted flange connection 16.

Preferably, as illustrated on Figure 1, each connection with each structural element 6 is a bolted flange connection 16.

In a variant, each connection with one structural element 6 is a bolted flange connection 16 and each connection with the other structural element 6 is a welded connection.

The connection of the beam 8 with one of the structural elements 6 or each of the structural element 6 allows manufacturing the support structure 4 as separate modules, which are then assembled via the bolted flange connection(s) 16. This makes manufacturing and maintenance easy, especially since the beam 10 integrates the tank 12 which implies the presence of fluid connection components.

In some examples, a section of the tank 12 is delimited in at least one primary tube 10 of the beam 8. This allows an easy connection of the tank 12 to fluid equipment 14 via the connection of an end of the primary tube 10 with one of the structural elements 6.

The primary tube 10 delimiting a section of the tank 12 has for example one end connected to one structural element 6 and the other end connected to the other structural or to another tube 10, in particular another primary tube 10 or a secondary tube 10.

In some examples, no section of the tank 12 is delimited in at least one primary tube 10, in particular in at least one primary tube 10 having one end connected to one of the structural elements 6 and the other end connected to the other structural element 6. This allows using said primary tube 10 as a pontoon for operators two walk inside the primary tube 10 moving between the structural elements 6.

In some examples, the tank 12 is delimited in at least one secondary tube 10 of the beam 8. The tank 12 is delimited for example in one single secondary tube 10 or in two or more secondary tubes 10.

In some examples, the beam 8 is connected to one of the structural element 6s by one single connection or two connections and/or the beam 8 is connected to the other structural element 6 by one single connection or two connections. The beam 8 is for example connected to the structural elements 6 via two, three or four connections.

In some examples, the beam 8 comprises two primary tubes 10 which are parallel and preferably horizontal, each of said two primary tube 10 having one end connected to each of the structural elements 6 by a connection 16 and one end connected to the other structural element 6 by a connection 16.

The beam 8 also comprises at least one secondary tube 10, the secondary tube(s) connecting the two primary tubes 10 together. For example, at least one or each secondary tube 10 extends between the two primary tubes 10 with having one end connected to one of the two primary tubes 10 and the other end connected to the other one of the two primary tubes 10.

The two primary tubes 10 are for example positioned one above the other, thus defining a lower primary tube 10 and an upper primary tube 10.

Advantageously, the tank 12 is delimited in at least one of the two primary tubes 10 and in at least one secondary tube 10. The tank 12 is for example delimited in one of the two primary tubes 10 and in at least one secondary tube 10, no section of the tank 12 being delimited in the other one of the two primary tubes. The primary tube 10 free of any section of the tank 12 is preferably an upper primary tube 10.

The beam 8 comprises for example two secondary tubes 10 each extending between the two primary tubes 10. At least one or each secondary tube 10 extends for example obliquely with respect to the primary tubes 10. Advantageously, the distance between the ends of the two secondary tubes 10 connected to one of the two primary tubes 10, in particular a lower primary tube 10, is for example strictly smaller than the distance between the ends of the two secondary tubes 10 connected to the other primary tubes 10, in particular an upper primary tube 10.

As illustrated on Figure 6, the beam 8 advantageously comprises upper and lower primary tubes 10, each having one end connected to one structural element 6 via a connection 16 and one end connected the other structural element 6 via a connection 16 and two secondary tubes 10, each secondary tube 10 extending between the two primary tubes 10.

A section of the tank 12 is delimited in the lower primary tube 10 and no section of the tank 12 is delimited in the upper primary tube 10. Optionally, the tank 12 is also delimited in the two secondary tubes 10.

The upper primary tube 10 can be used as a pontoon with avoiding the need for the operator to descend to the lower primary tube 10. In a variant, a section of the tank 12 is delimited in the upper primary tube 10 and no section of the tank 12 is delimited in the lower primary tube 10.

The tank 12 is for example fluidly connected to one of the structural elements 6 via the connection between the lower primary tube 10 and said structural element 6 and/or fluidly connected to the other structural element 7 via the connection between the lower primary tube 10 and said other second structural element 6.

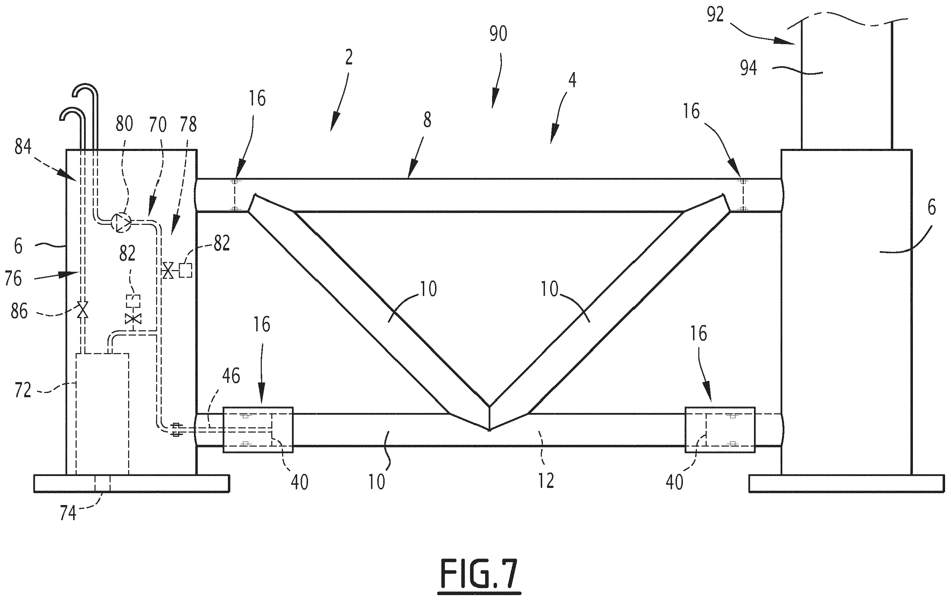

In the example of Figure 7, the tank 12 is fluidly connected to one of the structural elements 6 via the connection 16 between the lower primary tube 10 and said structural element 6 and fluidly connected to the other structural element 7 via the connection between the lower primary tube 10 and said other second structural element 6.

As illustrated on Figure 7, the fluid components of the floating offshore platform 2 define for example an attitude control system 70 configured for controlling the attitude of the floating offshore platform 2.

The attitude control system 70 comprises for example a ballast 72 arranged in one of of the structural element 6 defining a floater, the ballast 72 having a water opening 74 for allowing water to enter or exit the ballast 72 as a function of an amount of air contained in the ballast 72, and an fluid circuit 76 for controlling the amount of air contained in the ballast 72.

The tank 12 defines for example as a pressurized air storage for storing air to be fed to the ballast 72 for increasing floatability of the structural element 6 provided with the ballast 72 or storing air withdrawn from the ballast 72 to lower the floatability of the structural element 6 provided with the ballast 6.

The fluid circuit 76 comprises for example an inlet fluid line 78 configured for feeding pressurized air to the ballast 72, for feeding pressurized air to the tank 12 and/or for transferring pressurized air between the ballast 72 and the tank 12, in particular for transferring pressurized air from the ballast 72 to the tank 12 and/or transferring pressurized air from the tank 12 to the ballast 72.

The inlet fluid line 78 comprises for example a pump 80 fluidly connected to the ballast 72 for feeding pressurized air to the ballast 72 and/or fluidly connected to the tank 12 for feeding pressurized air to the tank 12.

The inlet fluid line 78 comprises for example one or several valves 82 arranged for controlling the circulation of air between the pump 80, the ballast 72 and the tank 12.

The fluid circuit 76 comprises for example an outlet fluid line 84 configured for releasing air from the ballast 72 to the open air. The outlet fluid line 84 comprises for example one or several valves 86 arranged for controlling the release of air from the ballast 72 to the open air.

In operation, when it is needed to lower the floatability of the structural element 6 provided with the ballast 72, the fluid circuit 76 is controlled to release air from the ballast 72 via the outlet fluid line 84 and/or by transferring air from the ballast 72 to the tank 12, whereby water enters the ballast 72 via the water opening 74.

When it is needed to increase the floatability of the structural element 6 provided with the ballast 72, the fluid circuit 76 is controlled to feed air from the outside and/or air stored in the tank 12 to the ballast 72, whereby water contained in the ballast 72 is pushed outside the ballast 72 via the water opening 74.

As illustrated on Figure 7, the inlet fluid line 78 and the outlet fluid line 84 are both located in the same structural element 6 which is preferably the structural element 6 comprising the ballast 72.

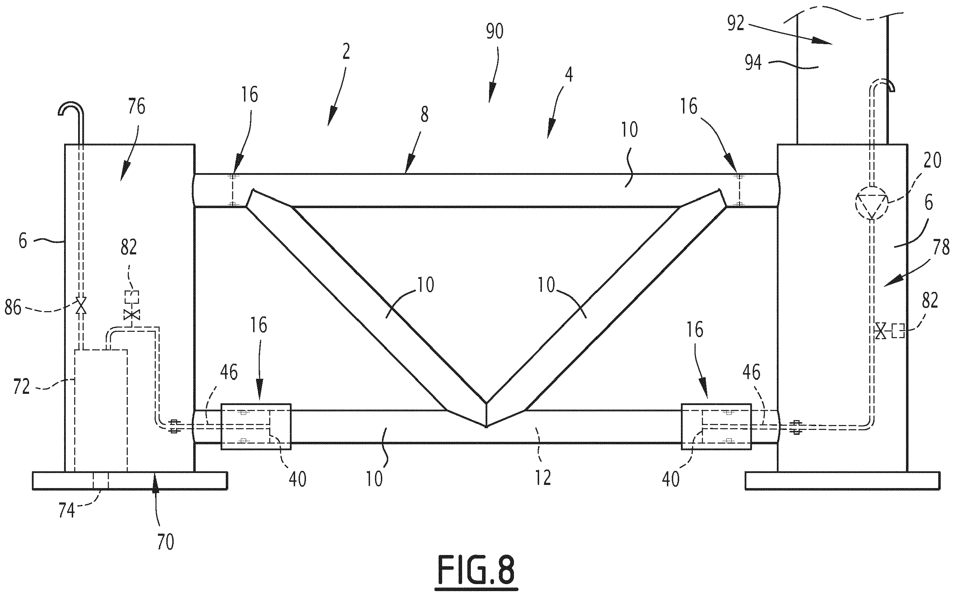

As illustrated on Figure 8, in a variant, the inlet fluid line 78 is located on one of the structural elements 6 (on the right on Figure 8) and the outlet fluid line 84 is located on the other structural element 6 (on the left on Figure 8), preferably the structural element 6 comprising the ballast 82.

The pump 80 is fluidly connected to the tank 12 which is fluidly connected to the ballast 72. The pump 80, the tank 12 and the ballast 72 are arranged fluidly in series. The pump 80 is fluidly connected to the ballast 72 via the tank 12.

Such a variant is advantageous as the inlet fluid line 78 may be provided on a structural element 6 to which operators mainly access when operating on the floating offshore platform. The operators can thus easily access the pump 80 for inspection and maintenance.

Said structural element 6 is for example a structural element 6 which is connected to several other structural elements 6 by respective beams 8, each peripheral structural element 6 being for example provided with a respective ballast 72, each beam 8 integrating a respective tank 12.

The attitude control system 60 comprises advantageously one single pump 80 provided on said structural element 6 and fluidly connected to the tank 12 integrated in each beam 8 for feeding the tank 12 with pressurized air.

Such a configuration is not construed to tank 12 connected to ballasts 72 of an attitude control system 70 but is applicable in a more general manner to a support structure 4 comprising a plurality of beam 12.

Hence, in some examples, the support structure 4 comprises a structural element 6 connected via respective beams 8 to a plurality of other structural elements 6, each beam 8 integrating a respective tank 12, the support structure 4 further comprising one pump provided on said structural element 6 and fluidly connected to the tank 12 of each said beam 8 for feeding the tank 12 with fluid.

The beam 8 may exhibits shapes different from that of Figures 7 and 8.

In some examples (not illustrated), the beam 8 differs from that of Figures 7 and 8 in that the beam 8 comprises one single secondary tube 10 extending obliquely between the two primary tubes 10.

In some examples (not illustrated), the beam 8 differs from that of Figure 7 and 8 in that the beam 8 comprises a first primary tube 10 extending between the structural elements 6 and in addition a second primary tube 10 extending between the first primary tube 10 and one of the structural elements 6 and/or a third primary tube 10 extending between the first primary tube 10 and the other structural element 6.

The two structural elements 6 connected by the beam 8 are advantageously two columns of the floating offshore platform 2.

The support structure 4 of the floating offshore platform 2 comprises for example a plurality of structural elements 6 defining columns connected by beams 8.

Each structural element 6 optionally defines a floater. In some examples, each structural elements 6 defines a floater.

In some examples, the floating offshore platform 2 comprises three structural elements 6, each structural element 6 being connected to each one of the two other structural elements 6 by a beam 8.

In some examples, the floating offshore platform 2 comprises two pairs of structural elements 6, the two structural elements 6of each pair being connected by a beam 8.

In some examples, the floating offshore platform 2 comprises one central structural element 6 and three or more peripheral structural elements 6 distributed circumferentially around the central structural element 6, each peripheral structural element 6being connected to the central structural element 6 by a respective beam 8.

The floating offshore platform 2 is preferably a floating offshore platform 2 of a wind turbine assembly 90 comprising a wind turbine 92 supporting by the floating offshore platform 2, e.g. by one of the structural elements 6 of the floating offshore platform 2, e.g. a floater.The bottom end of a mast 94 of the wind turbine is visible on Figures 1, 7 and 8.

Owing to the invention, it is possible to provide an offshore platform 2 comprising a support structure 4 which is a compact and lightweight naval construction with simple and robust design with ease of inspection, maintenance and installation thanks to a tank 12 integrated in one or several tubes 10 of a beam 8 of tubular construction extending between two structural elements 6 with being connected to at least one of the two structural elements 6 with one or several bolted flange connection 16, each bolted flange connection 16 connecting a tube 10 to a structural element 6.

The tank 12 is suitable for storage of liquid or gas, such as natural gas or natural condensates or air.

The bolted flange connections 16 provide for an easy erection of the support structure 4 with making the fluid connections of the tank 12 with the fluid components 14 easy to implement, to inspect and to maintain.

Sealing the bolted flange connection 16 avoids fluid ingress in the support structure 4, with limiting in particular fluid ingress in the tank 12, and/or fluid leak out from the support structure 4, in particular fluid leak from the tank 12.

Inwardly protruding first and second flanges 20, 22 avoid a direct contact of the first and second flanges 20, 22 flanges and the bolts 26 with the surrounding air or water.

A partition wall 40 provided in a tube 10 at a distance from a bolted flange connection 16 for delimiting a tank 12 avoids the bolted flange connection 16 being subjected to the mechanical stress due to the fluid contained in the tank, in particular when the fluid is a pressurized fluid, and avoids a direct contact between the bolted flange connection 16 and the fluid contained in the tank 12.

The support structure 4 is suitable for any kind of floating offshore platform and is particularly suitable for a floating offshore platform for a wind turbine.

## Claims

1. A floating offshore platform comprising a support structure (4), the support structure (4) comprising a beam (8) formed of one or several tubes (10), the beam (8) comprising a tank (12) for storing fluid integrated inside the beam (8), the tank (12) being delimited inside one or several tubes (10) of the beam (8), and a least one bolted flange connection (16), each bolted flange connection (16) connecting an end of one tube (10) of the beam (8) to another structural element (6) of the support structure (4), each bolted flange connection (16) comprising a first flange (20) and a second flange (22) bolted together with bolts (24), wherein at least one bolted flange connection (16) is sealed with a sealing assembly (32) comprising at least one sealing member (34, 48, 50, 62) configured for sealing the bolted flange connection (16).

2. The floating offshore platform as in claim 1, wherein the first flange (20) and/or the second flange (22) extend inwardly relative to the tube (10) of the beam (8).

3. The floating offshore platform as in claim 1 or 2, wherein the sealing assembly comprises a sealing member provided as a sealing sleeve (50) surrounding a junction between the tube of the beam and the other structural element.

4. The floating offshore platform as in any one of the preceding claims, wherein the sealing assembly comprises a sealing member provided as an annular seal (34) interposed between the first flange (20) and the second flange (22), the annular seal (34) being partly received in a groove formed in the first flange (20) and partly received in a groove formed in the second flange (22) or entirely received in a groove formed in the first flange (20) and in contact with a front face of the second flange (22) or entirely received in a groove formed in the second flange (22) and in contact with a front face of the first flange (20).

5. The floating offshore platform as in any one of the preceding claims, wherein one among the first flange (20) and the second flange (22) comprises an annular protrusion (54) configured to engage into a annular groove (56) formed in the other among the first flange (20) and the second flange (22).

6. The floating offshore platform as in claim 5, wherein at least one sealing member (58) is received in the annular groove (56) and pressed by the annular protrusion (54).

7. The floating offshore platform as in any one of the preceding claims, wherein a connection pipe (46) extending from the second flange (22), a sealing ring (62) being pressed between the connection pipe (46) and the first flange (20).

8. The floating offshore platform as in any one of the preceding claims, wherein facing faces of the first flange (20) and the second flange (22) are mutually in contact.

9. The floating offshore platform as in any one of the claims 1 - 7, wherein the sealing assembly comprises a sealing member provided as a sealing washer (48) interposed between the first flange (20) and the second flange (22).

10. The floating offshore platform as in any one of the preceding claims, wherein the tank is pressurized.

11. The floating offshore platform as in any one of the preceding claims, wherein the tube (10) comprises an internal partition wall (40) extending across the tube (10) for delimiting the tank (12) inside the tube (10), the partition wall (40) being located along the tube (10) at a distance from the first flange (20).

12. The floating offshore platform as in any one of the preceding claims, wherein the tank (12) is fluidly connected to fluid components (14) located outside the beam (18) via a connection pipe (46) extending through the bolted flange connection (16).

13. The floating offshore platform as in any one of the preceding claims, wherein the beam (8) comprises two tubes (10) each connected to the other structural element (6) by a respective bolted flange connection (16).

14. The floating offshore platform as in any one of the preceding claims, wherein the beam (8) extends between two structural elements (6), the beam being connected to at least one of the two structural elements (6) via one or several bolted flange connections (16).

15. Wind turbine assembly comprising a floating offshore platform as in any one of the preceding claims and a wind turbine (92) supported by the floating offshore platform.
